# EUROPEAN PATENT SPECIFICATION

(11) **EP 1 065 900 B1**
(45) Date of publication and mention of the grant of the patent: **28.09.2005**
(21) Application number: 99305281.0
(22) Date of filing: 02.07.1999
(51) Int. Cl.: H04Q 7/22

(54) **Telecommunication system**
Fernmeldesystem
Système de Télécommunication

(43) Date of publication of application: 03.01.2001
(73) Proprietor: LUCENT TECHNOLOGIES INC., Murray Hill, New Jersey 07974-0636 (US)
(72) Inventor: Palat, Sudeep Kumar, Swindon, Wiltshire SN5 6EE (GB); Yamini, Hatef, Swindon, Wiltshire SN5 6PP (GB); Yang, Jin, Swindon, Wiltshire SN5 7EP (GB)
(74) Representative: Williams, David John

(56) References cited:
- WO-A-99/33301
- MOULY ET AL: "The GSM System for Mobile Communicatons - Communication Management" FR,LASSAY-LES-CHATEAUX, EUROPE MEDIA, page 501-565-565 XP002103158 ISBN: 2-9507190-0-7

## Description

### Field of the Invention

This invention relates to telecommunications systems. In particular, but not exclusively, it relates to improvements relating to the Universal Mobile Telecommunications System (UMTS).

### Background to the Invention

A UMTS mobile station (MS) can be connected via a radio interface both as a traditional phone terminal, and as an Internet protocol (IP) terminal. With an IP connection and an associated quality of service mechanism, a terminal can make and receive a voice call via either the circuit-switch domain or the packet-switch domain over which packet based voice service can be provided. Acoordingly, an MS has two modes; it can act as a traditional mobile voice terminal and as a voice over Internet protocol (VoIP) terminal. However, there are some problems associated with this unique configuration.

One problem is that of how to address a mobile station for calls set up using different paths. Existing PSTN/ISDN systems route a call based upon a called party number. For the packet-switch (PS) path, the mobile station can be addressed using its IP address, using an e-mail-like address or by using a call party number assigned specifically for the mobile station. The call party number is sometimes referred to as an E164 number, after ITU document E164 relating to international telecommunication numbering or may be referred to as an MSISDN (mobile station ISDN) number. Since a PSTN terminal can only use digit numbers, the solution is generally to assign an MSISDN number for a mobile station as well. A problem then arises as to how to address the MS so that a call can follow either the circuit-switch (CS) path or the packet-switch (PS) path, using the two modes of the MS correspondingly.

Furthermore, the network operator needs the option to control and select the path for an incoming call. An operator can provide two alternative (CS or PS) paths for a call between an MS and other points. The operator may require some control over the path selection on a per-call basis.

One straightforward solution is to use two separate E164 numbers for each mobile station, each number corresponding to the particular path so that one number corresponds to the PS path and another number to the CS path. This has drawbacks. It is not user friendly and imposes extra management complexity. The user of a mobile station needs to manage two different telephone numbers and to make them known to those who may contact him. In many cases, users at both ends do not care which path is to be used to make a call. A transparent approach is therefore preferred.

On the other hand, the use of different phone numbers makes it very difficult for an operator to control and select the path for incoming calls, as this is predefined by the number called. There are two signalling interfaces between a mobile network and other networks for PS and CS paths respectively. Thus, calls arriving at a mobile switching centre (MSC) will go through the CS path and calls arriving at a gateway/signalling-gateway will use the PS path.

The present invention arose in an attempt to improve over the present situation.

It is known from published European patent application EP-A-0526764 to provide a telecommunications system comprising at least one mobile station and at least two possible paths of different transmission protocols, through which calls to and from the mobile station can be routed, wherein the mobile station is provided with a single address regardless of the path over which a call is to be routed, wherein one of the paths is a circuit-switch path, the system including means for selecting the path to be used, depending upon one or more selected criteria.

### Summary of the Invention

The present invention is characterised over the disclosure of EP-A-0526764 in that another of the paths is a packet-switch path, the criteria being dependent upon the traffic loads on the circuit-switch and packet-switch paths.

Preferably, the communications system is a UMTS (Universal Mobile Telecommunications System) 1.

In embodiments of the invention, a means for assigning a mobile station roaming number for the mobile station, based upon the path through which a call is, or is to be, routed, is provided. This can be an extended functionality of a visiting location register (VLR).

According to the present invention there is further provided a method of routing calls to or from a mobile station of a telecommunications system, wherein at least two possible paths of different protocols are available, over which calls to and from the mobile station can be routed, the paths comprising a circuit-switch path, the method comprising assigning a single address to the mobile station regardless of the path over which the call is to be routed, wherein the path to be used is selected depending upon one or more selected criteria, characterised by the paths comprising a packet-switch path, and the criteria are dependent upon the traffic loads on the circuit-switch and packet-switch paths.

### Brief Description of the Drawings

Embodiments of the invention will now be described, by way of example only, with reference to the accompanying drawings in which:
Figure 1 shows a UMTS mobile station connected via a radio interface to make and receive voice calls either a circuit-switch or packet-switch domain;
Figure 2a shows a circuit-switch path;
Figure 2b shows a packet-switch path; and
Figure 3 shows an implementation of path selection in an embodiment of the present invention.

### Detailed Description of Preferred Embodiments of the Invention

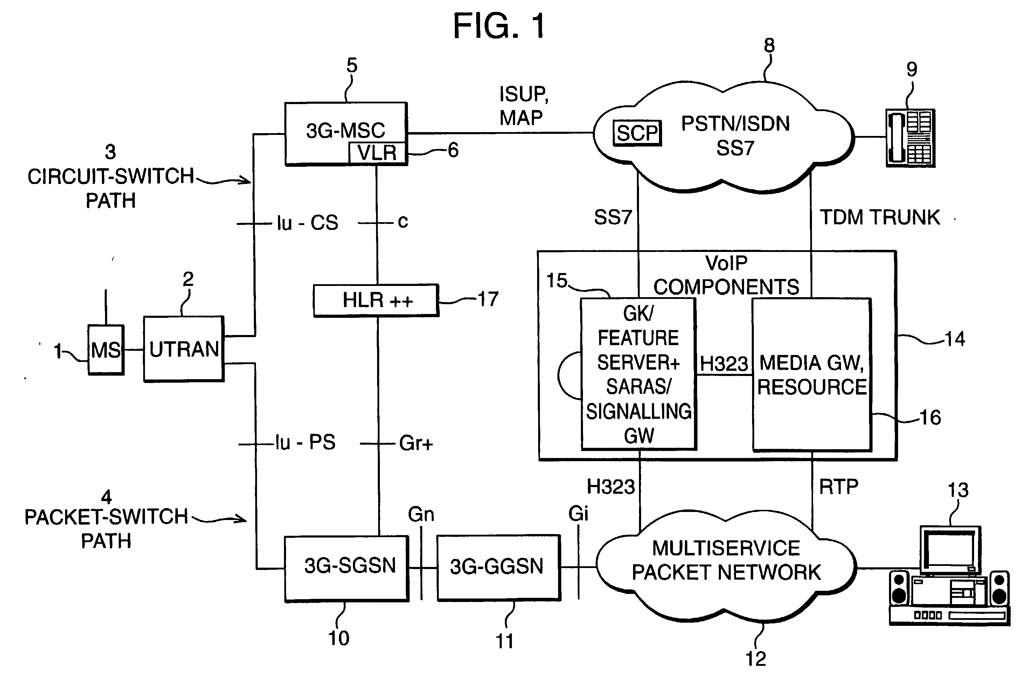

A UMTS mobile station (MS) can be connected via a radio interface both as an IP terminal and as a traditional mobile voice terminal. With an IP connection and the associated QoS (Quality of Service) mechanism, a terminal can make and receive a voice call via either the circuit-switch domain or the packet-switch domain. This is illustrated in Figure 1. A mobile station 1 is linked by a radio link to the UMTS Terrestrial Radio Access Network, UTRAN 2. A call may then be routed over a circuit-switch path, shown generally as 3, or a packet-switch path shown generally as 4. If the call is to be via the circuit-switch path, then it is passed through a switching circuit 5 which includes a visiting location register VLR 6. It is then routed through the PSTN/ISDN network 8 to a receiving telephone terminal 9.

If a call is to be made over the packet-switch path 4, then it is routed via a Serving GPRS Support Node (SGSN) 10 and a gateway GPRS support node 11 to a multi-service packet network 12 and thence onwards to a receiver such as a computer 13.

The same paths are of course used when the mobile station is receiving a call.

Note that in the Figure the term 3G refers to "third generation".

To enable a voice call across packet network and circuit networks, a voice over Internet Protocol Interworking Function VoIP IWF 14 is required. This has two major components, a gatekeeper/signalling gateway 15 and a media gateway 16. The gatekeeper 15 provides call control functionality and supplemental features such as call forwarding, call waiting and multiple-way call. The gatekeeper also provides functions such as address translation, admission control such that permission to complete call and set bandwidth limitations, manages gateways and controls call signalling, call management, reporting and logging. The signalling gateway part provides signalling into working at an interface to the SS7 (Signalling System No. 7) network.

The media gateway 16 provides many services such as protocol and media translations. It performs bi-directional synchronous/asynchronous conversion (Time Division Multiplex (TDM) to packet) and signalling inter-working functions including control interface and connection management.

HLR 17 is a Home Location Register.

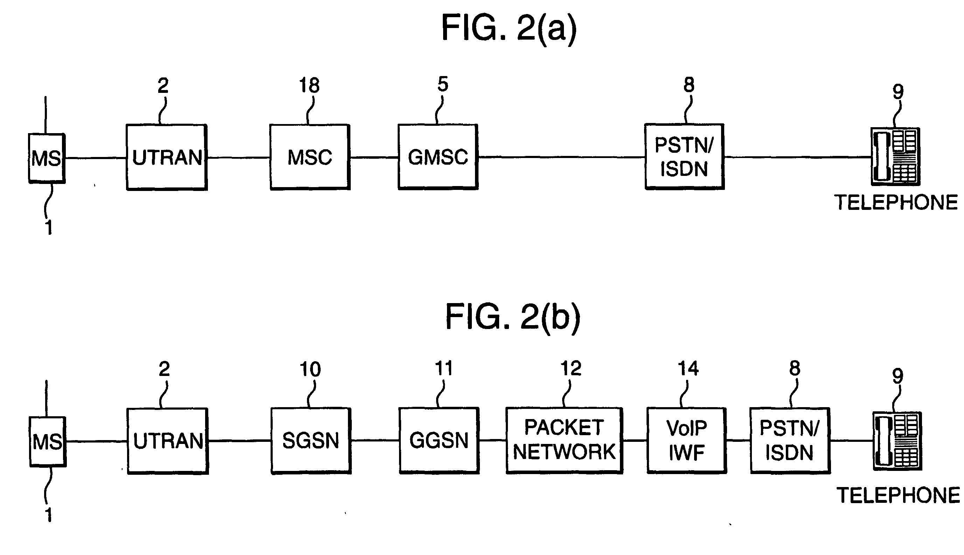

Figure 2a shows a typical CS path. Typically, the path comprises a PSTN terminal 9, a PSTN/ISDN network 8, a Gateway Mobile Switching Centre GMSC 5, a mobile switching centre MSC 18, UTRAN 2 and mobile station 1. It is also possible that part of the connection over the PSTN/ISDN backbone is replaced by a packet network together with VoIP IWF. This is not shown, for clarity.

The PS path, on the other hand, is shown in Figure 2b and comprises PSTN terminal 9, PSTN/ISDN network 8, VoIP IWF 14, packet network 12, GGSN 11, SGSN 12, UTRAN 2 and the mobile station 1.

In embodiments of the invention, a single number (MSISDN number) is used as the address for each mobile station. A mobile station is called using this number regardless of the path to be used within the UMTS PLMN (Public Land Mobile Network). Furthermore, a mobile station initiates a call using this number as the calling party number, again regardless of the path to be used.

For incoming calls, in embodiments of the invention, the visiting location register (VLR) may be enhanced or modified so that it can assign a mobile station roaming number (MSRN) for the called mobile station based upon the decision on the path (CS or PS) to be used. Other means for assigning an MSRN may be used.

The path selection for incoming calls is made possible by enhancing the VLR. In embodiments of the invention, there can be two parts to this enhancement. Firstly, the enhanced VLR can store the mobile stations capability as a VoIP terminal and the user's preference of accepting a call via VoIP or CS call.

Further, when an incoming call arrives from the PSTN/ISDN, the gateway MSC sends an inquiry, via the HLR, to the VLR for the MSRN in order to route the call request to the serving MSC. This inquiry from the HLR contains the IMSI (International Mobile Subscriber Identity) which is derived from the mobile station ISDN number by the HLR of the called mobile station. Upon receiving this inquiry, the VLR assigns a mobile station roaming number, MSRN, based on the decision on how to terminate the call, i.e. via CS or PS paths. The MSRN assigned will then be different (in prefix for example) so that the ISUP (ISDN User Part) message can be sent to the serving MSC or the serving gatekeeper/signalling gateway correspondingly.

The operator can decide upon the particular policy to be used to determine the path selection process. For example, this may be based on criteria such as the users terminal capability, i.e. if the terminal is capable of a VoIP call, the user's preference and traffic loads on the CS and PS paths.

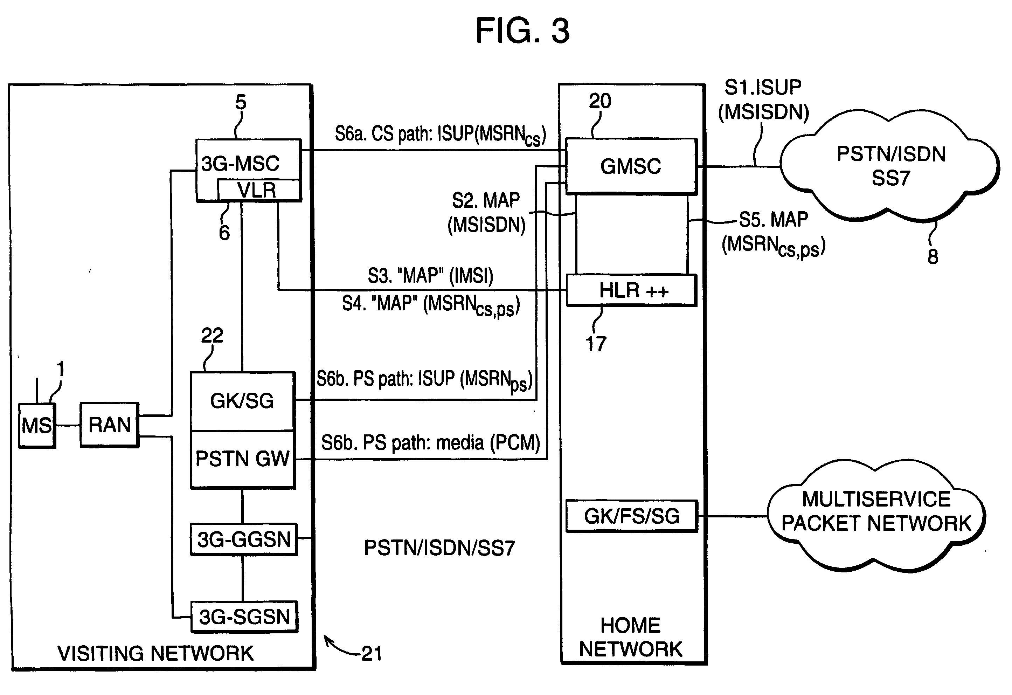

Figure 3 illustrates how the path selection for an incoming call is supported. It shows an example of an incoming call from the PSTN/ISDN domain 8 to a roaming mobile station 1. The message flow is as follows:
Step S1. A caller request is made from the ISDN 8 in an ISUP (ISDN User Part) message, which contains the MSISDN of the called party.
Step S2. The gateway mobile switching centre (GMSC) 20 receives the request and issues an inquiry to the HLR 17.
Step S3. The HLR, knowing that the called mobile station 1 is currently roaming, issues an inquiry to the VLR 6 in the visiting network 21.
Step S4. The VLR replies with a mobile station roaming number (MSRN), which is associated with the gatekeeper/signalling gateway (GK/SG) interface 22 or the MSC interface 23, depending on the path selected. This is shown as "MAP" (MSRN_{CS,PS}).
Step S5. The HLR relays the MSRN back to the GMSC 20.
Step S6. The GMSC then continues to route the call either to the MSC 5 or to the GK/SG 22 in the visiting network 21.
Step S6a. If the CS path has been selected (as reflected by the MSRN returned) then the call is routed to the MSC. The message flow after that is not shown in the Figure.
Step S6b. If the PS path is selected then the call is routed to the GK/SG via PSTN/ISDN. The GK/SG contacts the VLR 6 to provide the mobile identity (IMSI) from the MSRN. The GK then sets up a call to the MS over the PS domain via a PSTN/IP gateway. The message between the GK and mobile station is not shown.

Embodiments of the invention allow operators control over how to terminate incoming calls via the PS or CS domains, in a transparent way. This in turn can be used to optimise the use of network resources.

The invention can be used for other types of packet radio systems, such as GPRS.

## Claims

1. A telecommunications system comprising at least one mobile station (1) and at least two possible paths (3,4) of different transmission protocols, through which calls to and from the mobile station (1) can be routed, wherein the mobile station (1) is provided with a single address (MSISDN) regardless of the path (3,4) over which a call is to be routed, wherein one (3) of the paths is a circuit-switch path, the system including means (6) for selecting the path to be used, depending upon one or more selected criteria, **characterised in that** another (4) of the paths is a packet-switch path, the criteria being dependent upon the traffic loads on the circuit-switch and packet-switch paths (3,4).

2. A telecommunications system as claimed in Claim 1 which is a UMTS system.

3. A telecommunications system as claimed in Claim 1 or Claim 2, wherein the single address is a MSISDN number.

4. A telecommunications system as claimed in any of Claims 1 to 3 wherein the criteria includes the terminal capacity, or traffic loading on the signalling paths (3,4).

5. A telecommunications system as claimed in any preceding claim, including means (6) for assigning a mobile station roaming number (MSRN) for the mobile station (1), based upon the path (3,4) through which a call is to be routed.

6. A telecommunications system as claimed in Claim 5, wherein the means for assigning an MSRN is an enhanced Visiting Location Register (VLR,6).

7. A telecommunications system as claimed in Claim 5 or Claim 6, wherein the assigned MSRN determines the path.

8. A method of routing calls to or from a mobile station (1) of a telecommunications system, wherein at least two possible paths (3,4) of different protocols are available, over which calls to and from the mobile station (1) can be routed, the paths (3,4) comprising a circuit-switch path (3), the method comprising assigning a single address (MSISDN) to the mobile station (1) regardless of the path over which the call is to be routed, wherein the path to be used is selected depending upon one or more selected criteria, **characterised by** the paths (3,4) comprising a packet-switch path (4), and the criteria are dependent upon the traffic loads on the circuit-switch and packet-switch paths (3,4).

9. A method as claimed in Claim 8, wherein the system is a UMTS system.

10. A method as claimed in Claim 8 or Claim 9, wherein the single address is a MSISDN number.

11. A method as claimed in any of Claims 8 to 10, wherein the criteria includes the terminal capacity, or traffic loading on the signalling paths.

12. A method as claimed in any of Claims 8 to 11, including providing means for assigning a mobile station roaming number (MSRN) for the mobile station (1) based upon the path (3,4) through which a call is to be routed.

13. A method as claimed in Claim 12, wherein the MSRN assigning means is an enhanced Visiting Location Register (VLR,6).

14. A method as claimed in Claim 13, wherein the assigned MSRN determined the path.

## Patentansprüche

1. Telekommunikationssystem mit mindestens einer Mobilstation (1) und mindestens zwei möglichen Wegen (3, 4) unterschiedlicher Übertragungsprotokolle, über die Verbindungen zu und von der Mobilstation (1) geleitet werden können, wobei die Mobilstation (1) ungeachtet des Weges (3, 4), über den eine Verbindung zu leiten ist, mit einer einzigen Adresse (MSISDN) versehen ist, wobei einer (3) der Wege ein leitungsvermittelter Weg ist, wobei das System Mittel (6) zum Auswählen des zu benutzenden Weges in Abhängigkeit von einem oder mehreren ausgewählten Kriterien umfaßt, **dadurch gekennzeichnet, daß** ein anderer (4) der Wege ein paketvermittelter Weg ist, wobei die Kriterien von den Verkehrsbelastungen auf den leitungsvermittelten und paketvermittelten Wegen (3, 4) abhängig sind.

2. Telekommunikationssystem nach Anspruch 1, das ein UMTS-System ist.

3. Telekommunikationssystem nach Anspruch 1 oder Anspruch 2, wobei die einzige Adresse eine MSISDN-Nummer ist.

4. Telekommunikationssystem nach einem der Ansprüche 1 bis 3, wobei die Kriterien die Endgerätekapazität oder die Verkehrsbelastung auf den Zeichengabewegen (3, 4) umfassen.

5. Telekommunikationssystem nach einem der vorhergehenden Ansprüche, mit Mitteln (6) zum Zuweisen einer Roaming-Nummer (MSRN - Mobile Station Roaming Number) für die Mobilstation (1) auf Grundlage des Weges (3, 4), über den eine Verbindung zu leiten ist.

6. Telekommunikationssystem nach Anspruch 5, wobei das Mittel zum Zuweisen einer MSRN ein erweitertes Besuchsregister (VLR - Visitor Location Register, 6) ist.

7. Telekommunikationssystem nach Anspruch 5 oder Anspruch 6, wobei die zugewiesene MSRN den Weg bestimmt.

8. Verfahren zum Leiten von Verbindungen zu und von einer Mobilstation (1) eines Telekommunikationssystems, wobei mindestens zwei mögliche Wege (3, 4) unterschiedlicher Protokolle zur Verfügung stehen, über die Verbindungen zu und von der Mobilstation (1) geleitet werden können, wobei die Wege (3, 4) einen leitungsvermittelten Weg (3) umfassen, wobei das Verfahren das Zuweisen einer einzelnen Adresse (MSISDN) zu der Mobilstation (1) ungeachtet des Weges, über den die Verbindung zu leiten ist, umfaßt, wobei der zu benutzende Weg in Abhängigkeit von einem oder mehreren ausgewählten Kriterien ausgewählt wird, **dadurch gekennzeichnet, daß** die Wege (3, 4) einen paketvermittelten Weg (4) umfassen und die Kriterien von den Verkehrsbelastungen auf den leitungsvermittelten und paketvermittelten Wegen (3, 4) abhängig sind.

9. Verfahren nach Anspruch 8, wobei das System ein UMTS-System ist.

10. Verfahren nach Anspruch 8 oder Anspruch 9, wobei die einzelne Adresse eine MSISDN-Nummer ist.

11. Verfahren nach einem der Ansprüche 8 bis 10, wobei die Kriterien die Endgerätekapazität oder die Verkehrsbelastung auf den Zeichengabewegen umfassen.

12. Verfahren nach einem der Ansprüche 8 bis 11, mit Bereitstellung von Mitteln zum Zuweisen einer Roaming-Nummer (MSRN - Mobile Station Roaming Number) für die Mobilstation (1) auf Grundlage des Weges (3, 4), über den eine Verbindung zu leiten ist.

13. Verfahren nach Anspruch 12, wobei das MSRN-Zuweisungsmittel ein erweitertes Besuchsregister (VLR - Visiting Location Register, 6) ist.

14. Verfahren nach Anspruch 13, wobei die zugewiesene MSRN den Weg bestimmt.

## Revendications

1. Système de télécommunication comprenant au moins une station mobile (1) et au moins deux chemins possibles (3, 4) de protocoles de transmission différents, grâce auxquels des appels à destination ou provenant de la station mobile (1) peuvent être acheminés, dans lequel la station mobile (1) est pourvue d'une adresse unique (MSISDN) indépendamment du chemin (3, 4) sur lequel un appel doit être acheminé, dans lequel un (3) des chemins est un chemin à commutation de circuits, le système comprenant des moyens (6) pour sélectionner le chemin à utiliser, selon un ou plusieurs critères sélectionnés, **caractérisé en ce qu'**un autre (4) des chemins est un chemin à commutation de paquets, les critères étant dépendants des charges de trafic sur les chemins à commutation de circuits et à commutation de paquets (3, 4).

2. Système de télécommunication selon la revendication 1 qui est un système UMTS.

3. Système de télécommunication selon la revendication 1 ou la revendication 2, dans lequel l'adresse unique est un numéro MSISDN.

4. Système de télécommunication selon l'une quelconque des revendications 1 à 3 dans lequel les critères comprennent la capacité du terminal ou la charge du trafic sur les chemins de signalisation (3, 4).

5. Système de télécommunication selon l'une quelconque des revendications précédentes, comprenant des moyens (6) pour attribuer un numéro d'itinérance de station mobile (MSRN) à la station mobile (1), en se basant sur le chemin (3, 4) grâce auquel un appel doit être acheminé.

6. Système de télécommunication selon la revendication 5, dans lequel les moyens pour attribuer un MSRN sont un enregistreur amélioré de localisation des visiteurs (VLR, 6).

7. Système de télécommunication selon la revendication 5 ou la revendication 6, dans lequel le MSRN attribué détermine le chemin.

8. Procédé d'acheminement d'appels à destination ou en provenance d'une station mobile (1) d'un système de télécommunication, dans lequel au moins deux chemins possibles (3, 4) de protocoles différents sont disponibles, sur lesquels des appels à destination ou en provenance de la station mobile (1) peuvent être acheminés, les chemins (3, 4) comprenant un chemin à commutation de circuits (3), le procédé comprenant l'attribution d'une adresse unique (MSISDN) à la station mobile (1) indépendamment du chemin sur lequel l'appel doit être acheminé, dans lequel le chemin à utiliser est sélectionné selon un ou plusieurs critères sélectionnés, **caractérisé par** les chemins (3, 4) comprenant un chemin à commutation de paquets (4), et les critères sont dépendants des charges de trafic sur les chemins à commutation de circuits et à commutation de paquets (3, 4).

9. Procédé selon la revendication 8, dans lequel le système est un système UMTS.

10. Procédé selon la revendication 8 ou la revendication 9, dans lequel l'adresse unique est un numéro MSISDN.

11. Procédé selon l'une quelconque des revendications 8 à 10, dans lequel les critères comprennent la capacité du terminal ou la charge du trafic sur les chemins de signalisation.

12. Procédé selon l'une quelconque des revendications 8 à 11, comprenant la fourniture de moyens pour attribuer un numéro d'itinérance de station mobile (MSRN) à la station mobile (1), en se basant sur le chemin (3, 4) par lequel un appel doit être acheminé.

13. Procédé selon la revendication 12, dans lequel les moyens d'attribution de MSRN sont un enregistreur amélioré de localisation des visiteurs (VLR, 6).

14. Procédé selon la revendication 13, dans lequel le MSRN attribué détermine le chemin.
